# EUROPEAN PATENT SPECIFICATION

(11) **EP 4 477 461 B1**
(45) Date of publication and mention of the grant of the patent: **28.10.2026**
(21) Application number: 23863504.9
(22) Date of filing: 06.09.2023
(51) Int. Cl.: B60L 53/80, B60L 53/30, B60L 53/60, G06Q 10/083, B60L 53/53, G06Q 50/40, H01M 10/44, H01M 10/46, B60L 53/65, B60L 53/66, B60S 5/06, G07F 15/00, G07F 9/00

(54) **BATTERY SWAPPING STATION, CONTROL METHOD THEREOF AND BATTERY SWAPPING SYSTEM**
BATTERIEWECHSELSTATION, STEUERUNGSVERFAHREN DAFÜR UND BATTERIEWECHSELSYSTEM
STATION D'ÉCHANGE DE BATTERIES, SON PROCÉDÉ DE COMMANDE ET SYSTÈME D'ÉCHANGE DE BATTERIES

(30) Priority: 06.09.2022 KR 20220112783; 06.09.2022 KR 20220112784
(43) Date of publication of application: 18.12.2024
(73) Proprietor: LG Energy Solution, Ltd., Seoul 07335 (KR)
(72) Inventor: KIM, Sung-Won, Daejeon 34122 (KR)
(74) Representative: Plasseraud IP
(86) International application number: PCT/KR2023/013361
(87) International publication number: WO 2024/054039

(56) References cited:
- JP-A- 2022 028 452
- KR-A- 20120 019 491
- KR-A- 20160 115 183
- KR-A- 20210 030 559
- KR-A- 20210 030 559
- KR-A- 20220 050 735
- US-A1- 2016 267 579
- US-B2- 10 373 401
- US-B2- 10 839 451
- US-B2- 9 275 505

## Description

### TECHNICAL FIELD

The present disclosure relates to a technology to streamline the operation of a battery swapping station.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Batteries commercially available at present include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-discharging rate and high energy density.

A battery pack for a target device that requires large capacity and high voltage (e.g., an electric vehicle) includes dozens to hundreds of battery cells connected in series. Because it takes a long time to fully charge such a battery pack, a battery swapping station (BSS) has recently emerged as an alternative.

The battery swapping station refers to a device that supports the exchange of a discharged battery and a fully charged battery. In other words, the battery swapping system supports the user to withdraw a fully charged battery pack at the user's request, and when the discharged battery pack is stored in a slot that becomes empty (idle state) as the battery pack is withdrawn, the battery pack is charged to a fully charged state. Battery replacement at the battery swapping station may be done manually by the user or worker, or automatically by the battery swapping station.

From the user's perspective, there is no need to wait until the discharged battery pack mounted on the target device reaches a fully charged state, and the user may withdraw the already fully charged battery pack from the battery swapping station and drive the target device, thereby improving the user convenience.

The battery swapping station is equipped with a plurality of charging slots, and each charging slot is provided to charge the battery stored therein independently from other charging slots.

When a fully charged battery pack stored in a specific slot of the battery swapping station is withdrawn by the user, that specific slot enters an idle state. Since the charging function is stopped in the idle state, it is very important for the efficient operation of the battery swapping station to minimize the time that each slot of the battery swapping station remains in the idle state.

A conventional battery swapping station adopts a method in which, under the condition that discharged battery packs are stored in a predetermined number of charging slots in an idle state among the m (3 or more) charging slots provided in the battery swapping station, fully charged battery packs stored in a predetermined number of other charging slots in an occupied state are provided to the user. That is, conventionally, among the m charging slots provided in the battery swapping station, at least a certain number of charging slots must be maintained in an idle state, so it is impossible to operate all of the m slots in an occupied state, which is a major limitation in the operating efficiency of the battery swapping station.

Therefore, a technology that may improve the operating efficiency by shortening the idle time of each charging slot provided in the battery swapping station as much as possible is required.

Further background art is described in JP 2022 028452 A, US 10373401 B2 and US 2016/267579 A1.

### DISCLOSURE

### Technical Problem

The present disclosure is designed to solve the problems of the related art, and therefore the present disclosure is directed to providing a battery swapping station that may improve the overall operating efficiency of the battery swapping station by minimizing an idle time of each of a plurality of slots provided in the battery swapping station, a battery swapping system including the battery swapping station, and a control method for the battery swapping station.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

A battery swapping station according to one aspect of the present disclosure comprises first to m^{th} charging slots (m is a natural number of 2 or more) capable of storing and withdrawing a battery pack, respectively; an information input/output device configured to receive a battery replacement request from a user; and a controller configured to check battery storage information of the first to m^{th} charging slots. The controller is configured to determine whether a battery withdrawal condition is satisfied in response to the battery replacement request, and switch a k^{th} charging slot (k is a natural number less than or equal to m) in which a fully charged battery pack is stored among the first to m^{th} charging slots from a locked mode to an unlocked mode in response to the battery withdrawal condition being satisfied. The controller is further configured to control the information input/output device to output a usage approval signal for the fully charged battery pack in order to switch the fully charged battery pack from a usage disapproval state to a usage approval state in response to a discharged battery pack being stored in the k^{th} charging slot, after the fully charged battery pack is withdrawn from the k^{th} charging slot.

The battery withdrawal condition may include at least one of (i) a first withdrawal condition in which use authority of the user is authenticated by user identification information of the user, and (ii) a second withdrawal condition in which a discharged battery pack being located adjacent to the battery swapping station.

The controller may be configured to determine whether the second withdrawal condition is satisfied, under a condition that the first withdrawal condition is satisfied.

The controller may be configured to determine that the second withdrawal condition is satisfied in response to pack identification information of the discharged battery pack being non-contactly detected by the information input/output device.

The controller may be configured to switch the k^{th} charging slot from the unlocked mode to the locked mode in response to a discharged battery pack of the user being stored in the k^{th} charging slot, after the fully charged battery pack is withdrawn from the k^{th} charging slot.

The controller may be configured to control the information input/output device to output a usage disapproval signal for the fully charged battery pack, before the fully charged battery pack is withdrawn from the k^{th} charging slot.

The controller may be configured to control the information input/output device to output a battery storage request message in response to a discharged battery pack stored in the k^{th} charging slot being not detected until an elapsed time from a withdrawal time of the fully charged battery pack from the k^{th} charging slot reaches a threshold time.

The controller may be configured to determine a reward or penalty for the user based on the elapsed time from the withdrawal time of the fully charged battery pack from the k^{th} charging slot.

The reward may include an extension of the threshold time. The penalty may include shortening of the threshold time.

A battery swapping system according to another aspect of the present disclosure comprises the battery swapping station.

A control method of a battery swapping station according to still another aspect of the present disclosure comprises: by the controller, receiving a battery replacement request from a user through the information input/output device; by the controller, determining whether a battery withdrawal condition is satisfied in response to the battery replacement request; and switching a k^{th} charging slot (k is a natural number less than or equal to m) in which a fully charged battery pack is stored among the first to m^{th} charging slots from a locked mode to an unlocked mode in response to the battery withdrawal condition being satisfied. The control method further comprises, by the controller, controlling the information input/output device to output a usage approval signal for the fully charged battery pack in order to switch the fully charged battery pack from a usage disapproval state to a usage approval state in response to a discharged battery pack being stored in the k^{th} charging slot, after the fully charged battery pack is withdrawn from the k^{th} charging slot.

The battery withdrawal condition may include at least one of (i) a first withdrawal condition in which use authority of the user is authenticated by user identification information of the user, and (ii) a second withdrawal condition in which a discharged battery pack is located adjacent to the battery swapping station.

The control method of a battery swapping station may further comprise, by the controller, controlling the information input/output device to output a battery storage request message in response to the discharged battery pack of the user stored in the k^{th} charging slot being not detected until an elapsed time from a withdrawal time of the fully charged battery pack from the k^{th} charging slot reaches a threshold time.

### Advantageous Effects

According to at least one of the embodiments of the present disclosure, the overall operating efficiency of the battery swapping station may be improved by minimizing the idle time of each of the plurality of slots provided in the battery swapping station.

In addition, according to at least one of the embodiments of the present disclosure, by providing rewards or imposing penalties to a user according to the time elapsed from the time when the user wishing to exchange a battery withdraws a fully charged battery from a specific slot of the battery swapping station to the time when a discharged battery is stored in the same slot, the user may be encouraged to actively participate in improving the operating efficiency of the battery swapping station.

In addition, according to at least one of the embodiments of the present disclosure, under the condition that a specific slot of the battery swapping station is switched from an idle state (a state in which a fully charged battery is withdrawn by a user so that the slot is empty) to an occupied state (a state in which a discharged battery is stored by a user), by remotely controlling the fully charged battery drawn from the specific slot to a usable state, the user may be encouraged to store the discharged battery of the user in the specific slot as quickly as possible.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing referenced to explain the configuration of a battery swapping system according to the present disclosure.
FIG. 2 is a diagram schematically showing the configuration of a battery swapping station shown in FIG. 1.
FIG. 3 is a drawing referenced to schematically explain the configuration of a genuine battery pack that can be stored and withdrawn in/from a battery swapping station.
FIG. 4 is a flowchart referenced to schematically explain a control method of the battery swapping station 100 according to the first embodiment of the present disclosure.
FIGS. 5a to 5c are diagrams referenced to explain a battery replacement process according to the method of FIG. 4.
FIG. 6 is a flowchart referenced to schematically explain a control method of the battery swapping station according to the second embodiment of the present disclosure.
FIGS. 7a to 7c are diagrams referenced to explain a battery replacement process according to the method of FIG. 6.
FIG. 8 is a flowchart referenced to schematically explain a control method of the battery swapping station according to the third embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise. Additionally, terms such as "... unit" described in the specification refer to a unit that processes at least one function or operation, and may be implemented as hardware, software, or a combination of hardware and software.

In addition, throughout the specification, when a portion is referred to as being "connected" to another portion, it is not limited to the case that they are "directly connected", but it also includes the case where they are "indirectly connected" with another element being interposed between them.

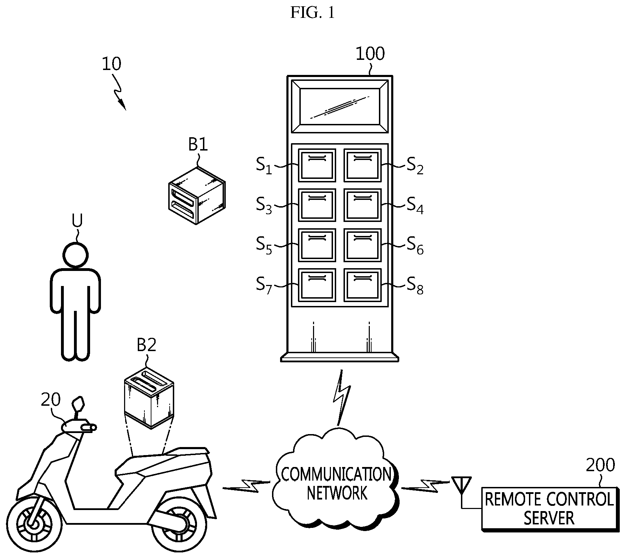

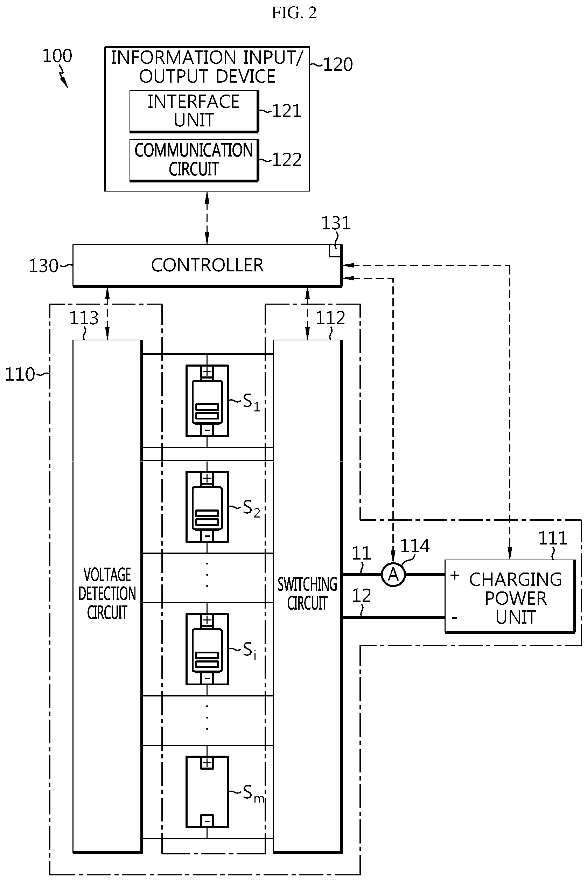

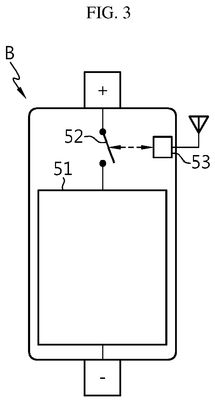

FIG. 1 is a drawing referenced to explain the configuration of a battery swapping system according to the present disclosure, FIG. 2 is a diagram schematically showing the configuration of a battery swapping station shown in FIG. 1, and FIG. 3 is a drawing referenced to schematically explain the configuration of a genuine battery pack that can be stored and withdrawn in/from a battery swapping station.

Referring to FIGS. 1 to 3, the battery swapping system 10 includes a battery swapping station 100 and a remote control server 200.

The battery swapping station 100 includes first to m^{th} charging slots (S₁ to Sₘ, m is a natural number of 2 or more), an information input/output device 120, a charging device 110, and a controller 130.

Each of the first to m^{th} charging slots (S₁ to Sₘ) is provided to allow storage and withdrawal of a battery pack. In FIG. 1, m = 8, that is, the battery swapping station 100 is illustrated as having a total of 8 charging slots (S₁ to S₈). Hereinafter, when explaining common content of the first to m^{th} charging slots (S₁ to Sₘ), the symbol S or Sᵢ (i is a natural number of m or less) will be used. Unlike that illustration in FIG. 1, those skilled in the art will easily understand that the number of charging slots S may be less than 8 or more than 8.

The state in which the battery pack B is not stored in the charging slot S may be called an 'idle state (or released state)', and the state in which the battery pack B is stored in the charging slot S may be called an 'occupied state (or stocked state)'. In FIG. 2, the charging slots (S₁, S₂) are illustrated as being in an occupied state, and the charging slot (Sₘ) is illustrated as being in an idle state.

The information input/output device 120 includes an interface unit 121 and a communication circuit 122.

The interface unit 121 may receive various necessary information, including a battery replacement request from a user U who wishes to exchange a discharged battery pack B2 of the user for a fully charged battery pack B1. For example, the interface unit 121 may include at least one of known information input means such as a touch screen, a keyboard, a mouse, a QR scanner, a microphone, etc. Additionally, the information input/output device 120 may output various information notifying the progress of battery pack replacement. For example, the interface unit 121 may include at least one of known information output means such as a touch screen, a speaker, etc.

The battery replacement request may be input by manipulation of the user on the interface unit 121, or may be output from a mobile terminal as a dedicated application is executed on the mobile terminal owned by the user U.

The communication circuit 122 is configured to access a remote control server 200 located remotely from the battery swapping station 100 through a wired/wireless communication network and transmit and receive information related to the battery swapping service to and from the remote control server 200. Additionally, the communication circuit 122 may transmit a usage disapproval signal or a usage approval signal to the battery pack stored in each charging slot S in an occupied state among the first to m^{th} charging slots (S₁ to Sₘ) through a wired/wireless communication network. Additionally, the communication circuit 122 may transmit a usage disapproval signal or a usage approval signal to the battery pack withdrawn by the user U from each charging slot S among the first to m^{th} charging slots (S₁ to Sₘ).

The wired communication may be, for example, CAN (controller area network) communication, and the wireless communication may be, for example, ZigBee or Bluetooth communication. Of course, as long as it supports wired/wireless communication between the battery swapping station 100 and the remote control server 200, the type of communication protocol is not particularly limited.

The controller 130 may be operably coupled to each of the first to m^{th} charging slots (S₁ to Sₘ), the information input/output device 120, and the charging device 110. The operational combination of two components means that the two components are connected directly or indirectly to enable transmission and reception of signals in one direction or two directions.

In terms of hardware, the controller 130 may be implemented using at least one of ASICs (application specific integrated circuits), DSPs (digital signal processors), DSPDs (digital signal processing devices), PLDs (programmable logic devices), FPGAs (field programmable gate arrays), microprocessors, and electrical units for performing other functions.

The controller 130 may include a memory 131. The memory 131 may store data or programs required for each component of the battery swapping station 100 to perform operations and functions, data generated while performing operations and functions, and the like. The memory 131 may store at least one program, application, data, or instructions executed by the controller 130. The type of memory 131 is not particularly limited as long as it is known information storage means capable of recording, erasing, updating, and reading data. As an example, the memory 131 may be implemented as at least one of a flash memory type, a hard disk type, a solid state disk (SSD) type, a solid disk drive (SDD) type, a multimedia card micro type, a random access memory (RAM), and a static RAM (SRAM), a ROM (Read Only Memory), an EEPROM (Electrically Erasable Programmable Read Only Memory), and a PROM (Programmable Read Only Memory), but the present disclosure is not necessarily limited to the specific form of the memory. Also, the memory 131 may store program codes in which processes executable by the controller 130 are defined.

The remote control server 200 may be configured to enable one-way or two-way communication with the battery swapping station 100. The remote control server 200 may be configured to enable one-way or two-way communication with the battery pack B.

The remote control server 200 may include a communication circuit 122 configured to communicate with the battery swapping station 100 through a wired communication method and/or a wireless communication method. The remote control server 200 may communicate with the battery pack B through wired communication and/or wireless communication.

Any one or a combination of two or more of various known communication methods may be employed for communication between the remote control server 200, the battery swapping station 100, and the battery pack B. For example, at least two of the remote control server 200, the battery swapping station 100, and the battery pack B may communicate with each other through cellular, WIFI, Bluetooth, NFC, or RF methods. For another example, the remote control server 200, the battery swapping station 100, and the battery pack may be connected with a cable or the like and communicate with each other.

The remote control server 200 may be configured to perform a user authentication operation for the user U who wishes to exchange the battery, through collaboration with the battery swapping station 100.

Specifically, as a preliminary procedure for using the battery swapping station 100, the user U may run a dedicated application installed on a mobile terminal and register user identification information of the user and payment information in the remote control server 200. After user registration (e.g., membership registration) to use the battery swapping station 100 is completed, the user U may transmit an authentication request including the user identification information of the user to the battery swapping station 100 by manipulating the information input/output device 120 to enter user U ID and password into the battery swapping station 100, tagging a member identification card, scanning a QR code displayed on the screen when the dedicated application of the mobile terminal is run with a code scanner of the information input/output device 120. The payment information is used to pre-pay or post-pay the usage fee for the battery swapping station 100.

In response to that a battery replacement request is received from the user U, the controller 130 may extract user identification information from the received battery replacement request. Subsequently, the controller 130 may control the communication circuit 122 to transmit the extracted user identification information to the remote control server 200.

The remote control server 200 may determine whether the user U has use authority of the battery swapping station 100 by searching the user identification information received from the battery swapping station 100 from a pre-stored user database provided therein. In other words, the remote control server 200 may determine that if the member information matching the user identification information acquired through the mediation of the battery swapping station 100 is already registered in the user database, the user U is a proper user with use authority of the battery swapping station 100.

On the other hand, if there is no member information matching the user identification information in the user database, the remote control server 200 may determine that the user U does not have use authority for the battery swapping station 100.

When it is determined that the user U is a proper user, the remote control server 200 may transmit a first response signal indicating authentication success to the battery swapping station 100. On the other hand, if it is determined that the user U does not have use authority for the battery swapping station 100, the remote control server 200 may transmit a second response signal indicating authentication failure to the battery swapping station 100.

The controller 130 may control the interface unit 121 to output an authentication success message indicating that user authentication is successful to the user U in response to the first response signal received from the remote control server 200 through the communication circuit 122.

The controller 130 may control the interface unit 121 to output an authentication failure message (e.g., error message) indicating that user authentication has failed to the user U in response to the second response signal received from the remote control server 200 through the communication circuit 122. If user identification information is re-entered after the authentication failure message is output, the battery swapping station 100 may re-perform the authentication procedure for the re-entered user identification information.

The remote control server 200 may be configured to remotely control the fully charged battery pack B1 withdrawn by the user U from the battery swapping station 100 to a usage disapproval state or a usage approval state.

Alternatively, the battery swapping station 100 may perform at least some of the procedures for user authentication described above, or may perform user authentication procedures on behalf of the remote control server 200. Additionally, instead of the remote control server 200, the battery swapping station 100 may be configured to directly remotely control the fully charged battery pack B1 to the usage disapproval state or the usage approval state.

The usage disapproval state refers to a state in which the electrical connection between the plus terminal and the minus terminal of the battery pack B is open. Therefore, the battery pack B, which is in the usage disapproval state, cannot be charged or discharged.

The usage approval state refers to a state in which the electrical connection is formed between the plus terminal and the minus terminal of the battery pack B. Therefore, the battery pack B in the usage approval state can be used normally, including charging and discharging.

Specifically, when a usage restriction request including pack identification information of the battery pack B is received from the battery swapping station 100, the remote control server 200 may transmit (e.g. broadcast) a usage restriction signal including the pack identification information of the battery pack B to the battery pack B. Even though the battery pack B is withdrawn from the battery swapping station 100 by the user U, the battery pack B may be placed in the usage disapproval state in response to the usage restriction signal containing the pack identification information thereof.

When a usage approval request including pack identification information is received from the battery swapping station 100, the remote control server 200 may transmit a usage approval signal including the pack identification information to the battery pack B. The battery pack B may be withdrawn from the battery swapping station 100 by the user U in a usage disapproval state and then switched to the usage approval state by the usage approval signal including the battery pack ID thereof.

Referring to FIG. 2, the charging device 110 includes a charging power unit 111, a switching circuit 112, a voltage detection circuit 113, and a current sensor 114. To facilitate understanding, FIG. 2 shows the first to m^{th} charging slots (S₁ to Sₘ) and the controller 130 along with the charging device 110.

The charging power unit 111 may be activated or deactivated according to a command from the controller 130. While activated, the charging power unit 111 may operate in any one of a constant current charging mode or a constant voltage charging mode according to a command from the controller 130.

The switching circuit 112 is configured to electrically connect one or more of the first to m^{th} charging slots (S₁ to Sₘ) to the charging power unit 111. That is, the switching circuit 112 may electrically connect each of the first to m^{th} charging slots (S₁ to Sₘ) to the charging power unit 111 or electrically separate it from the charging power unit 111 according to a command from the controller 130.

The charging slot S is a pack room including the first terminal (+) and the second terminal (-). The pack room refers to the space where the battery pack B is stored. When the battery pack B is stored in the inner compartment of the charging slot S, the positive and negative terminals of the battery pack B may be electrically connected to the first terminal (+) and the second terminal (-) of the charging slot S, respectively.

The voltage detection circuit 113 is provided to be electrically connected to the first terminal (+) and the second terminal (-) of each of the first to m^{th} charging slots (S₁ to Sₘ). The voltage detection circuit 113 detects voltage (hereinafter, simply referred to as 'pack voltage') across both ends of the battery pack B stored in each of the first to m^{th} charging slots (S₁ to Sₘ) using the potential difference between the first terminal (+) and the second terminal (-) of each of the first to m^{th} charging slots (S₁ to Sₘ). The voltage detection circuit 113 may transmit a voltage signal representing the detected battery voltage to the controller 130 through analog-to-digital conversion.

The current sensor 114 may be implemented to include one or more of known current detection elements such as a shunt resistor, a Hall effect element, etc.

As shown in FIG. 2, the current sensor 114 is electrically connected to the power path (a pair of power lines 11, 12) between the switching circuit 112 and the charging power unit 111. To aid understanding, the power lines 11, 12 are shown as thick solid lines.

The current sensor 114 may detect the charging current flowing in the power paths 11, 12 between the switching circuit 112 and the charging power unit 111 while the charging power unit 111 is operating in a constant current charging mode or a constant voltage charging mode, and output a current signal representing the detected charging current to the controller 130. Alternatively, m current sensors 114 may be provided to correspond one-to-one to the first to m^{th} charging slots (S₁ to Sₘ). These m current sensors 114 may individually detect the charging current flowing through each of the first to m^{th} charging slots (S₁ to Sₘ).

The controller 130 may determine a voltage value indicating the pack voltage of each charging slot in the occupied state among the first to m^{th} charging slots (S₁ to Sₘ) based on the voltage signal received from the voltage detection circuit 113 at every set time (e.g., 0.01 seconds), and record the determined voltage value in a memory. Additionally, the controller 130 may determine a current value representing the charging current based on the current signal received from the current sensor 114 at each set time and record the current value in the memory 131.

The controller 130 may monitor the battery storage information of the first to m^{th} charging slots (S₁ to Sₘ). The battery storage information may include slot state information indicating whether each of the first to m^{th} charging slots (S₁ to Sₘ) is in the idle state or the occupied state. Additionally, the battery storage information may include cumulative idle time and/or cumulative occupied time for each of the first to m^{th} charging slots (S₁ to Sₘ). The cumulative idle time may be the total time maintained in the idle state from the most recent time when the charging slot S is switched from the occupied state to the idle state. The cumulative occupied time may be the total time maintained in the occupied state from the most recent time when the charging slot S is switched from the idle state to the occupied state. In addition, the battery storage information may include pack identification information and/or state parameters (e.g., pack voltage, SOC, SOH) of the battery pack B stored in each charging slot S in the occupied state among the first to m^{th} charging slots (S₁ to Sₘ).

When the i^{th} charging slot (Sᵢ) is in the occupied state, the controller 130 may monitor (estimate) the SOC and/or SOH of the battery pack stored in the i^{th} charging slot (Sᵢ) based on the time series of the voltage value and/or current value of the pack voltage of the battery pack B stored in the i^{th} charging slot (Sᵢ). Any one or a combination of two or more of various known methods may be used to estimate SOC and/or SOH. For example, SOC-OCV map, ampere counting, and extended Kalman filter may be used to estimate the SOC of the battery pack.

In this specification, the genuine battery pack B that can be used in the battery swapping station 100 may be standardized to have specifications that can be stored in the charging slot S of the battery swapping station 100, and can be normal charged by the charging power supplied by the battery swapping station 100 in a state of being stored in the charging slot S.

Referring to FIG. 3, the battery pack B includes a cell group 51, a wireless communication circuit 53, and a pack switch 52.

The cell group 51 includes at least one battery cell. The type of battery cell is not particularly limited as long as it can be repeatedly charged and discharged, such as a lithium-ion cell. When the cell group 51 includes a plurality of battery cells, the plurality of battery cells may be connected to each other in series, parallel, or series-parallel combination.

When receiving the usage restriction signal from the remote control server 200, the wireless communication circuit 53 controls the pack switch 52 to a turn-off state. When receiving the usage approval signal from the remote control server 200, the wireless communication circuit 53 controls the pack switch 52 to a turn-on state. Additionally, the wireless communication circuit 53 may include an NFC tag on which the pack identification information of the battery pack is recorded. If the NFC tag is located within a predetermined proximity to the NFC reader provided in the communication circuit 122 of the battery swapping station 100, the NFC reader may collect the pack identification information from the NFC tag in a non-contact manner.

The pack switch 52 is installed on the current path between the plus terminal and the minus terminal of the battery pack B. Specifically, the pack switch 52 may be installed between the plus terminal of the battery pack B and the plus terminal of the cell group 51, or between the minus terminal of the battery pack B and the minus terminal of the cell group 51. The plus terminal of the cell group 51 may be the positive terminal of the battery cell located electrically most upstream among the plurality of battery cells in the cell group 51. The minus terminal of the cell group 51 may be the negative terminal of the battery cell located electrically most downstream among the plurality of battery cells in the cell group 51.

While the pack switch 52 is in the turn-off state, the current path between the plus terminal and the minus terminal of the battery pack B is open. While the pack switch 52 is in the turn-on state, the current path between the plus terminal and the minus terminal of the battery pack B is closed.

Alternatively, at least one of the usage restriction signal and the usage approval signal may be transmitted from the remote control server 200 to the battery pack B through the mediation of the battery swapping station 100. For example, when the remote control server 200 transmits a usage restriction signal to the battery swapping station 100, the battery swapping station 100 may transmit the usage restriction signal received from remote control server 200 to the battery pack B.

Alternatively, at least one of the usage restriction signal and the usage approval signal may be transmitted directly to the battery pack by the battery swapping station 100 instead of the remote control server 200.

The battery swapping station 100 may charge the battery pack B stored in each charging slot S in the occupied state.

If the user U is successfully authenticated with the user identification information of the user, the user may withdraw the battery pack B stored in the charging slot S in the occupied state among the first to m^{th} charging slots (S₁ to Sₘ) of the battery swapping station 100 from the charging slot S.

Specifically, when the user U who wishes to exchange the battery is certified as a proper user, the battery swapping station 100 may remotely control the fully charged battery pack B1 withdrawn by the user U to an one of a usage disapproval state and a usage approval state by monitoring whether the discharged battery pack B2 of the user U is stored in the k^{th} charging slot (Sₖ) after the fully charged battery pack B1 stored in the k^{th} charging slot (Sₖ) among the first to m^{th} charging slots (S₁ to Sₘ) is withdrawal by the user U.

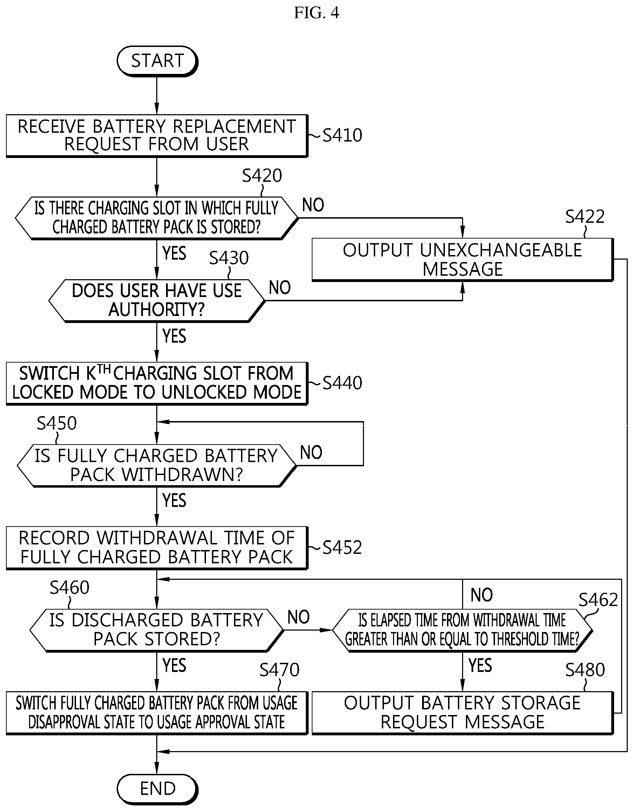

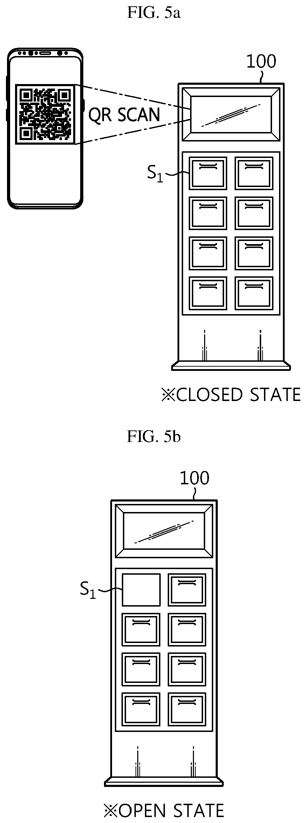

FIG. 4 is a flowchart referenced to schematically explain a control method of the battery swapping station 100 according to the first embodiment of the present disclosure, and FIGS. 5a to 5c are diagrams referenced to explain a battery replacement process according to the method of FIG. 4.

Referring to FIGS. 1 to 5c, in step S410, the controller 130 receives a battery replacement request from the user U through the information input/output device 120. The battery replacement request may include user identification information of the user U.

As an example, the user U may transmit a battery replacement request to the battery swapping station 100 by entering ID and PW of the user U into the information input/output device 120 provided at the battery swapping station 100, or by tagging the member identification card of the user.

As another example, as shown in FIG. 5a, the battery replacement request may be transmitted to the battery swapping station 100 by allowing the QR code displayed on the screen of the mobile terminal of the user U to be scanned by the information input/output device 120. The user identification information may be recorded in the QR code and/or the member identification card, and the information input/output device 120 may collect the user identification information from the QR code and/or the member identification card in a non-contact manner.

In step S420, the controller 130 determines whether there is a charging slot S in which a fully charged battery pack B1 is stored among the first to m^{th} charging slots (S₁ to Sₘ). That is, it is determined in step S420 whether a fully charged battery pack B1 is stored in at least one of the first to m^{th} charging slots (S₁ to Sₘ). In FIG. 5a, the fully charged battery pack B1 is illustrated as being stored in the charging slot (S₁) in a closed state (locked mode).

If the value of step S420 is "YES", the process may proceed to step S430. If the value of step S420 is "NO", it indicates that a fully charged battery is not stored in any of the first to m^{th} charging slots (S₁ to Sₘ). For example, if all of the first to m^{th} charging slots (S₁ to Sₘ) are in the idle state, the value output in step S420 may be "NO". As another example, even if all of the first to m^{th} charging slots (S₁ to Sₘ) are in the occupied state, if all battery packs B are not in the fully charged state, the value output in step S420 may be "NO". If the value of step S420 is "NO", the process may proceed to step S422.

In relation to step S420, if a fully charged battery pack B1 is stored in only one charging slot among the first to m^{th} charging slots (S₁ to Sₘ), the controller 130 may select a specific charging slot in which the fully charged battery pack B1 is stored as a target charging slot. If a fully charged battery pack B1 is stored in each of two or more charging slots among the first to m^{th} charging slots (S₁ to Sₘ), the controller 130 may select any one of the two or more charging slots as a target charging slot. For example, among the two or more charging slots, the charging slot in which the battery pack B with a maximum SOH is stored may be selected as the target charging slot. As another example, among the two or more charging slots, the charging slot with the longest time maintained in the occupied state may be selected as the target charging slot. As another example, among the two or more charging slots, the charging slot that stores the battery pack B, which has the longest time maintained in the fully charged state, may be selected as the target charging slot.

Hereinafter, the target charging slot may be referred to as a k^{th} charging slot (Sₖ). In other words, when k is a natural number of 1 or more and m or less, the k^{th} charging slot (Sₖ) is any one charging slot among the first to m^{th} charging slots (S₁ to Sₘ) in which the fully charged battery pack B1, which allows withdrawal by the user U, is stored. Hereinafter, for convenience of explanation, it will be assumed that the first charging slot (S₁) is selected as the target charging slot.

In step S430, the controller 130 determines whether the user U has use authority for the battery swapping station 100 based on the user identification information included in the battery replacement request. In other words, it is determined in step S430 whether authentication for use authority of the user U is successful. Step S430 is a procedure that determines whether the first withdrawal condition is satisfied as the battery withdrawal condition.

The controller 130 may obtain an authentication result for the use authority of the user U by searching whether member registration information matching the user identification information is recorded in the user database.

Alternatively, the controller 130 may extract user identification information from the battery replacement request and then transmit a remote authentication request including the extracted user identification information to the remote control server 200. The remote control server 200 may transmit the authentication result for the use authority of the user U to the battery swapping station 100 in response to the remote authentication request.

If the value of step S430 is "YES", it indicates that the user U is a proper user and the authentication is successful. If the value of step S430 is "YES", the process proceeds to step S440. If the value of step S430 is "NO", it indicates that the authentication for the use authority of the user U fails. If the value of step S430 is "NO", the process may proceed to step S422.

In step S422, the controller 130 controls the information input/output device 120 to output an unexchangeable message.

If step S422 is executed since the value of step S420 is "NO", the unexchangeable message may be intended to notify the user U that a fully charged battery pack B1 does not exist. When at least one of the first to m^{th} charging slots (S₁ to Sₘ) is in the occupied state, the controller 130 may calculate the remaining charging time of the battery pack B for each charging slot in the occupied state, and add the minimum waiting time among the calculated remaining charging time to the unexchangeable message.

If step S422 is executed since the value of step S430 is "NO", the unexchangeable message may include a request to re-enter the user identification information.

In step S440, the controller 130 switches the k^{th} charging slot (Sₖ) from the locked mode to the unlocked mode. Specifically, the input port of the k^{th} charging slot (Sₖ) may be maintained in the locked mode when the value of step S430 is "NO" and may switch from the locked mode to the unlocked mode when the value of step S430 is "YES". For example, in the locked state, the input port of the charging slot (S₁) is closed as shown in FIG. 5a, while in the unlocked mode, the input port of the charging slot (S₁) is in the open state as shown in FIG. 5b.

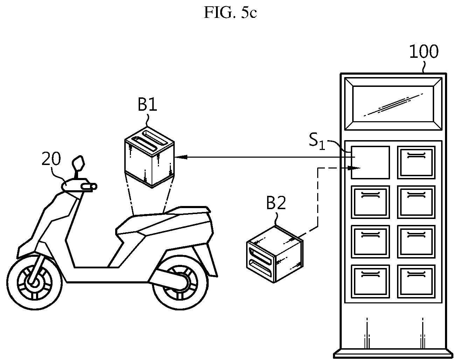

The controller 130 may control the charging device 110 to stop supplying charging power to the fully charged battery pack B1 stored in the k^{th} charging slot (Sₖ) before the k^{th} charging slot (Sₖ) is switched to the unlocked mode. Accordingly, the user U may safely withdraw a fully charged battery pack B1 through the input port of the k^{th} charging slot (Sₖ). Referring to FIG. 5c, the user U may remove the discharged battery pack B2 mounted on the small electric vehicle 20 of the user and then install the fully charged battery pack B1 withdrawn from the charging slot (S₁) on the small electric vehicle 20.

In step S450, the controller 130 determines whether the fully charged battery pack B1 is withdrawn from the k^{th} charging slot (Sₖ). For example, when the fully charged battery pack B1 is withdrawn, the voltage between the terminals of the k^{th} charging slot (Sₖ) by the voltage detection circuit 113 becomes substantially 0 V, and accordingly, the controller 130 may identify that withdrawal of the fully charged battery pack B1 from the k^{th} charging slot (Sₖ) is completed. If the value of step S450 is "YES", the process proceeds to step S452.

In step S452, the controller 130 records the withdrawal time of the fully charged battery pack B1 from the k^{th} charging slot (Sₖ).

In step S460, the controller 130 determines whether the discharged battery pack B2 is stored in the k^{th} charging slot (Sₖ). If the value of step S460 is "NO", the process proceeds to step S462. If the value of step S460 is "YES", the process proceeds to step S470.

In step S462, the controller 130 determines whether the elapsed time from the withdrawal time is greater than or equal to a threshold time. If the value of step S460 is "YES", the process may proceed to step S480. The threshold time may be a predetermined length of time commonly applied to all users U with use authority for the battery swapping station 100.

Alternatively, the controller 130 may differentially set the threshold time for each user U, depending on membership level or past battery replacement history.

In step S470, the controller 130 switches the fully charged battery pack B1 from the usage disapproval state to the usage approval state. As an example, the controller 130 may control the communication circuit 122 to output the usage approval signal including the pack identification information of the fully charged battery pack B1. As another example, the controller 130 may transmit a remote usage approval request including the pack identification information of the fully charged battery pack B1 to the remote control server 200, and the remote control server 200 may wirelessly transmit (e.g., broadcast) the usage approval signal including the pack identification information of the fully charged battery pack B1 in response to the remote usage approval request received from the battery swapping station 100. Additionally, in step S470, the controller 130 may return the k^{th} charging slot (Sₖ) from the unlocked mode to the locked mode.

In step S480, the controller 130 controls the information input/output device 120 to output a battery storage request message. The battery storage request message may be a visual and/or audible notification signal encouraging the user U to store the discharged battery pack B2 in the k^{th} charging slot (Sₖ).

The controller 130 may terminate the method according to FIG. 4 when the k^{th} charging slot (Sₖ) is not converted from the idle state to the occupied state even though step S480 is performed a predetermined number of times.

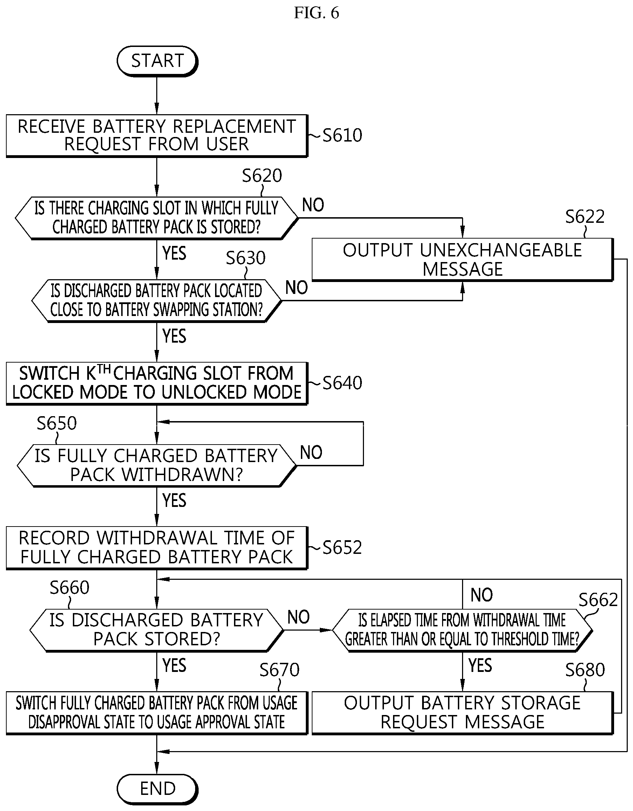

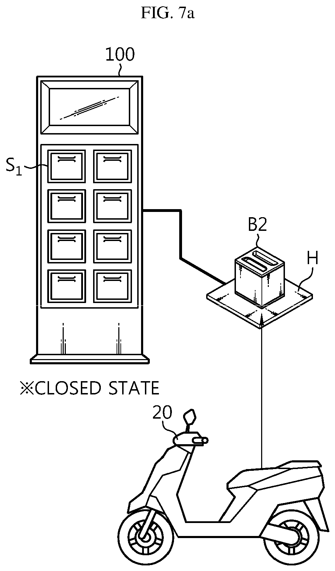

FIG. 6 is a flowchart referenced to schematically explain a control method of the battery swapping station according to the second embodiment of the present disclosure, and FIGS. 7a to 7c are diagrams referenced to explain a battery replacement process according to the method of FIG. 6.

Referring to FIGS. 1 to 3 and 6 to 7c, in step S610, the controller 130 receives a battery replacement request from the user U through the information input/output device 120. In response to receiving the battery replacement request, the controller 130 may switch the NFC reader of the information input/output device 120 from the sleep state to the wake-up state.

In step S620, the controller 130 determines whether there is a charging slot (Sₖ) in which a fully charged battery pack B1 is stored among the first to m^{th} charging slots (S₁ to Sₘ). FIG. 7a illustrates that k = 1, that is, a charging slot (S₁) as a target charging slot exists in the battery swapping station 100. If the value of step S620 is "NO", the process may proceed to step S622. If the value of step S620 is "YES", the process proceeds to step S630.

In step S630, the controller 130 determines whether the discharged battery pack B2 is located close to the battery swapping station 100. In other words, step S430 is a procedure that determines whether the second withdrawal condition is satisfied as the battery withdrawal condition.

For example, as shown in FIG. 7a, the user U may remove the discharged battery pack B2 mounted on the small electric vehicle 20 of the user and then place the discharged battery pack B2 on a temporary pack holder H provided at the battery swapping station 100. The temporary pack holder H may be equipped with an NFC reader included in the communication circuit 122 of the information input/output device 120. Then, the pack identification information is collected from the NFC tag attached to the discharged battery pack B2 by the NFC reader. The pack identification information is unique information of the discharged battery pack B2 that may confirm whether the discharged battery pack B2 is a genuine product and distinguish it from other battery packs. If the value of step S630 is "YES", the process proceeds to step S640. If the value of step S630 is "NO", the process may proceed to step S622.

In step S622, the controller 130 controls the information input/output device 120 to output an unexchangeable message.

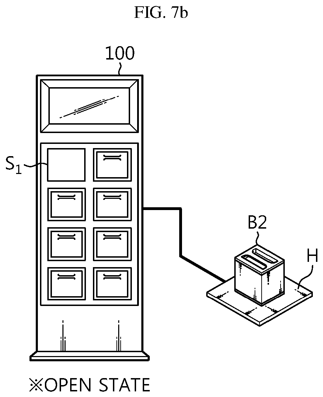

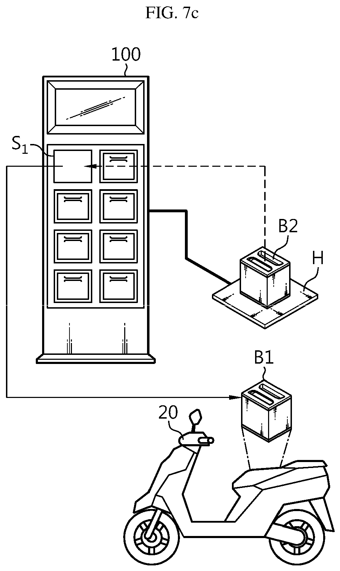

In step S640, the controller 130 switches the k^{th} charging slot (Sₖ) from the locked mode to the unlocked mode. Accordingly, as illustrated in FIG. 7b, the input port of the charging slot (S₁) is in an open state. Then, as shown in FIG. 7c, the user U may withdraw the fully charged battery pack B1 from the charging slot (S₁) and mount it on the small electric vehicle 20, and then store the discharged battery pack B2 from the temporary pack holder H into the charging slot (S₁).

In step S650, the controller 130 determines whether the fully charged battery pack B1 is withdrawn from the k^{th} charging slot (Sₖ). If the value of step S650 is "YES", the process proceeds to step S660.

In step S652, the controller 130 records the withdrawal time of the fully charged battery pack B1 from the k^{th} charging slot (Sₖ).

In step S660, the controller 130 determines whether the discharged battery is stored in the k^{th} charging slot (Sₖ). If the value of step S660 is "NO", the process proceeds to step S662. If the value of step S660 is "YES", the process proceeds to step S670.

In step S662, the controller 130 determines whether the elapsed time from the withdrawal time is greater than or equal to the threshold time. If the value of step S660 is "YES", the process proceeds to step S680.

In step S670, the controller 130 switches the fully charged battery pack B1 from the usage disapproval state to the usage approval state.

In step S680, the controller 130 controls the information input/output device 120 to output a battery storage request message. The controller 130 may end the method according to FIG. 6 when the k^{th} charging slot (Sₖ) is not converted from the idle state to the occupied state even though step S680 is performed a predetermined number of times.

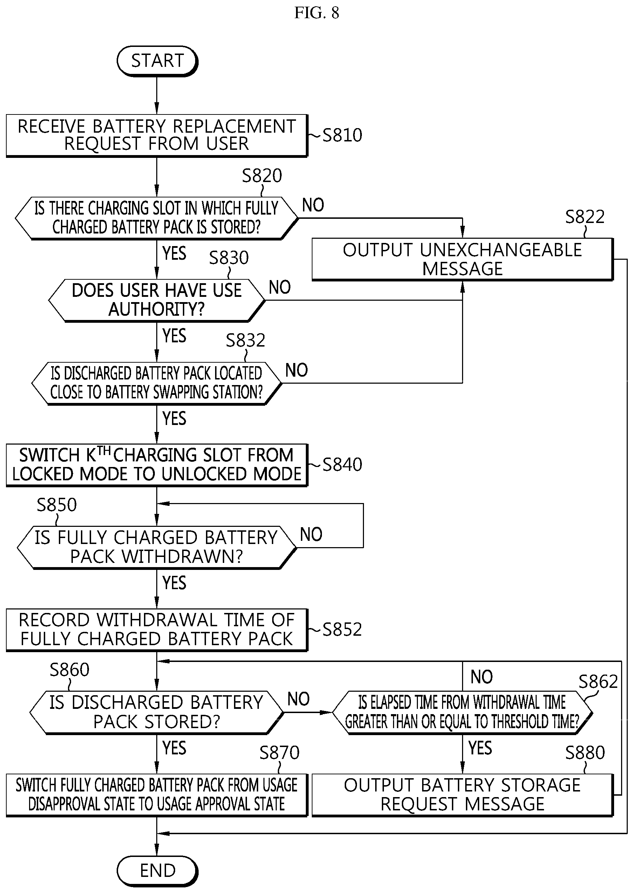

FIG. 8 is a flowchart referenced to schematically explain a control method of the battery swapping station according to the third embodiment of the present disclosure.

Referring to FIGS. 1 to 3 and FIG. 8, in step S810, the controller 130 receives a battery replacement request from the user U through the information input/output device 120. Step S810 is substantially the same as step S410 in FIG. 4.

In step S820, the controller 130 determines whether there is a charging slot in which a fully charged battery pack B1 is stored among the first to m^{th} charging slots (S₁ to Sₘ). If the value of step S820 is "YES", the process may proceed to step S830. If the value of step S820 is "NO", the process may proceed to step S822. Step S820 is substantially the same as step S420 in FIG. 4.

In step S830, the controller 130 determines whether the user U has use authority for the battery swapping station 100 based on the user identification information included in the battery replacement request. Step S830 is substantially the same as step S430 in FIG. 4.

In step S832, the controller 130 determines whether the discharged battery pack B2 is located close to the battery swapping station 100. Step S832 is substantially the same as step S630 in FIG. 6. That is, the battery withdrawal condition includes the first withdrawal condition according to step S830 and the second withdrawal condition according to step S832. Additionally, the controller 130 may determine whether the second withdrawal condition is satisfied on the condition that the first withdrawal condition is satisfied.

In step S822, the controller 130 controls the information input/output device 120 to output an unexchangeable message. If step S822 is executed since the value of step S820 is "NO", the unexchangeable message may be intended to notify the user U that a fully charged battery pack B1 does not exist. If step S822 is executed since the value of step S830 is "NO", the unexchangeable message may include a request to re-enter the user identification information. If step S822 is executed since the value of step S832 is "NO", the unexchangeable message may include a request to place the discharged battery pack B2 on the temporary pack holder H.

In step S840, the controller 130 switches the k^{th} charging slot (Sₖ) from the locked mode to the unlocked mode. Step S840 is substantially the same as step S420 in FIG. 4
In step S850, the controller 130 determines whether the fully charged battery pack B1 is withdrawn from the k^{th} charging slot (Sₖ). If the value of step S850 is "YES", the process proceeds to step S852.

In step S852, the controller 130 records the withdrawal time of the fully charged battery pack B1 from the k^{th} charging slot (Sₖ).

In step S860, the controller 130 determines whether the discharged battery pack B2 is stored in the k^{th} charging slot (Sₖ). If the value of step S860 is "NO", the process proceeds to step S862. If the value of step S860 is "YES", the process proceeds to step S870.

In step S862, the controller 130 determines whether the elapsed time from the withdrawal time is greater than or equal to the threshold time. If the value of step S862 is "YES", the process may proceed to step S880. Step S862 is substantially the same as step S462 in FIG. 4.

In step S870, the controller 130 switches the fully charged battery pack B1 from the usage disapproval state to the usage approval state. Step S870 is substantially the same as step S470 in FIG. 4.

In step S880, the controller 130 controls the information input/output device 120 to output a battery storage request message. The controller 130 may terminate the method according to FIG. 8 when the k^{th} charging slot (Sₖ) is not converted from the idle state to the occupied state even though step S880 is performed a predetermined number of times.

With respect to the first to third embodiments, the controller 130 may determine a reward or penalty for the user U based on the elapsed time from the withdrawal time of the fully charged battery pack B1 from the k^{th} charging slot (Sₖ).

The reward may include an extension of the threshold time. For example, when the elapsed time is less than the threshold time, the controller 130 may record the threshold time extended by an amount of time that has a positive correlation with the time difference between the elapsed time and the threshold time by mapping it to the user identification information of the user U.

The penalty may include shortening of the threshold time. For example, when the elapsed time exceeds the threshold time, the controller 130 may record the threshold time shortened by the amount of time that has a positive correlation with the time difference between the elapsed time and the threshold time by mapping it to the user identification information of the user U.

In other words, each time the user U uses the battery swapping station 100, the sooner the user U returns the discharged battery pack B2 of the user to the battery swapping station 100, the longer the threshold time when using the battery swapping station 100 next time. On the other hand, the later the user U returns the discharged battery pack B2 to the battery swapping station 100, the shorter the threshold time when using the battery swapping station 100 next time.

According to the embodiments of the present disclosure described above with reference to FIGS. 1 to 8, there are the following technical advantages. First, by adopting the first withdrawal-later storage method, all charging slots can be operated in the occupied state without the need to leave a certain number of charging slots in the idle state among the plurality of charging slots in the battery replacement station. Second, under the condition that the discharged battery pack is stored in a specific charging slot in the idle state, the fully charged battery pack B1 provided to the user U is later switched to the usage approval state, so it is possible to prevent abuse of the battery swapping station 100 operated in the first-withdrawal-later-storage method. Third, by providing a reward or imposing a penalty to the user U according to the elapsed time from when the fully charged battery pack is withdrawn from a specific slot until the discharged battery pack is stored in the specific slot, it is possible to shorten the idle time in which the specific slot is maintained to the idle state.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, it should be understood that the detailed description and specific examples, while indicating preferred embodiments of the disclosure, are given by way of illustration only, since various changes and modifications within the scope of the invention as defined in the appended claims will become apparent to those skilled in the art from this detailed description.

Additionally, each embodiment may be selectively combined in part or in whole to allow various modifications.

## Claims

1. A battery swapping station (100), comprising:
first to m^{th} charging slots (S₁, ..., Sₘ) capable of storing and withdrawing a battery pack, respectively, where m is a natural number of 2 or more;
an information input/output device (120) configured to receive a battery replacement request from a user; and
a controller (130) configured to check battery storage information of the first to m^{th} charging slots,
wherein the controller is configured to:
determine, in response to the battery replacement request, whether a battery withdrawal condition is satisfied, and
switch a k^{th} charging slot in which a fully charged battery pack is stored among the first to m^{th} charging slots from a locked mode to an unlocked mode in response to the battery withdrawal condition being satisfied, where k is a natural number less than or equal to m;
**characterized in that** the controller is further configured to control the information input/output device to output a usage approval signal for the fully charged battery pack in order to switch the fully charged battery pack from a usage disapproval state to a usage approval state in response to a discharged battery pack being stored in the k^{th} charging slot, after the fully charged battery pack is withdrawn from the k^{th} charging slot.

2. The battery swapping station according to claim 1, wherein the battery withdrawal condition includes at least one of (i) a first withdrawal condition in which use authority of the user is authenticated by user identification information of the user, and (ii) a second withdrawal condition in which a discharged battery pack is located adjacent to the battery swapping station.

3. The battery swapping station according to claim 1, wherein the controller is configured to determine whether the second withdrawal condition is satisfied, under a condition that the first withdrawal condition is satisfied.

4. The battery swapping station according to claim 2, wherein the controller is configured to determine that the second withdrawal condition is satisfied in response to pack identification information of the discharged battery pack being non-contactly detected by the information input/output device.

5. The battery swapping station according to claim 1, wherein the controller is configured to switch the k^{th} charging slot from the unlocked mode to the locked mode in response to a discharged battery pack of the user being stored in the k^{th} charging slot, after the fully charged battery pack is withdrawn from the k^{th} charging slot.

6. The battery swapping station according to claim 1, wherein the controller is configured to control the information input/output device to output a usage disapproval signal for the fully charged battery pack, before the fully charged battery pack is withdrawn from the k^{th} charging slot.

7. The battery swapping station according to claim 1, wherein the controller is configured to control the information input/output device to output a battery storage request message in response to a discharged battery pack stored in the k^{th} charging slot being not detected until an elapsed time from a withdrawal time of the fully charged battery pack from the k^{th} charging slot reaches a threshold time.

8. The battery swapping station according to claim 7, wherein the controller is configured to determine a reward or penalty for the user based on the elapsed time from the withdrawal time of the fully charged battery pack from the k^{th} charging slot.

9. The battery swapping station according to claim 8, wherein the reward includes an extension of the threshold time, and
wherein the penalty includes shortening of the threshold time.

10. A battery swapping system, comprising the battery swapping station according to any one of claims 1 to 9.

11. A control method of a battery swapping station, which includes first to m^{th} charging slots capable of storing and withdrawing a battery pack, respectively, an information input/output device, and a controller, where m is a natural number of 2 or more, the control method comprising:
by the controller, receiving (S410) a battery replacement request from a user through the information input/output device;
by the controller, determining whether a battery withdrawal condition is satisfied in response to the battery replacement request; and
switching (S440) a k^{th} charging slot in which a fully charged battery pack is stored among the first to m^{th} charging slots from a locked mode to an unlocked mode in response to the battery withdrawal condition being satisfied, where k is a natural number less than or equal to m;
**characterized by** further comprising: by the controller, controlling (S470) the information input/output device to output a usage approval signal for the fully charged battery pack in order to switch the fully charged battery pack from a usage disapproval state to a usage approval state in response to a discharged battery pack being stored in the k^{th} charging slot, after the fully charged battery pack is withdrawn from the k^{th} charging slot.

12. The control method of the battery swapping station according to claim 11, wherein the battery withdrawal condition includes at least one of (i) a first withdrawal condition in which use authority of the user is authenticated by user identification information of the user, and (ii) a second withdrawal condition in which a discharged battery pack is located adjacent to the battery swapping station.

13. The control method of the battery swapping station according to claim 11, further comprising: by the controller, controlling (S480) the information input/output device to output a battery storage request message in response to the discharged battery pack of the user stored in the k^{th} charging slot being not detected until an elapsed time from a withdrawal time of the fully charged battery pack from the k^{th} charging slot reaches a threshold time.

## Patentansprüche

1. Batteriewechselstation (100), umfassend:
erste bis m^{te} Ladeschächte (S₁, ..., Sₘ), die jeweils zum Einlagern und Auslagern eines Batteriepacks in der Lage sind, wobei m eine natürliche Zahl von 2 oder mehr ist;
eine Informationseingabe/-ausgabevorrichtung (120), die konfiguriert ist, um eine Batteriewechselanforderung von einem Benutzer zu empfangen; und
eine Steuereinheit (130), die konfiguriert ist, um Batterieeinlagerungsinformationen der ersten bis m^{ten} Ladeschächte zu überprüfen,
wobei die Steuereinheit konfiguriert ist, um:
als Reaktion auf die Batteriewechselanforderung zu bestimmen, ob eine Batterieauslagerungsbedingung erfüllt ist, und
einen k^{ten} Ladeschacht, in dem ein voll aufgeladener Batteriepack eingelagert ist, unter den ersten bis m^{ten} Ladeschächten von einem gesperrten Modus in einen entsperrten Modus als Reaktion darauf umzuschalten, dass die Batterieauslagerungsbedingung erfüllt ist, wobei k eine natürliche Zahl kleiner oder gleich m ist;
**dadurch gekennzeichnet, dass** die Steuereinheit weiter konfiguriert ist, um die Informationseingabe/-ausgabevorrichtung zu steuern, um ein Nutzungsgenehmigungssignal für den voll aufgeladenen Batteriepack auszugeben, um den voll aufgeladenen Batteriepack von einem Nutzungsablehnungszustand in einen Nutzungsgenehmigungszustand als Reaktion darauf umzuschalten, dass ein entladener Batteriepack in dem k^{ten} Ladeschacht eingelagert wird, nachdem der voll aufgeladene Batteriepack aus dem k^{ten} Ladeschacht ausgelagert worden ist.

2. Batteriewechselstation nach Anspruch 1, wobei die Batterieauslagerungsbedingung mindestens eine von (i) einer ersten Auslagerungsbedingung, bei der eine Nutzungsberechtigung des Benutzers durch Benutzeridentifikationsinformationen des Benutzers authentifiziert wird, und (ii) einer zweiten Auslagerungsbedingung, bei der sich ein entladener Batteriepack an die Batteriewechselstation angrenzend befindet, beinhaltet.

3. Batteriewechselstation nach Anspruch 1, wobei die Steuereinheit konfiguriert ist, um zu bestimmen, ob die zweite Auslagerungsbedingung unter einer Bedingung erfüllt ist, dass die erste Auslagerungsbedingung erfüllt ist.

4. Batteriewechselstation nach Anspruch 2, wobei die Steuereinheit konfiguriert ist, um zu bestimmen, dass die zweite Auslagerungsbedingung als Reaktion darauf erfüllt ist, dass Packidentifikationsinformationen des entladenen Batteriepacks von der Informationseingabe/-ausgabevorrichtung berührungslos erkannt werden.

5. Batteriewechselstation nach Anspruch 1, wobei die Steuereinheit konfiguriert ist, um den k^{ten} Ladeschacht vom entsperrten Modus in den gesperrten Modus als Reaktion darauf umzuschalten, dass ein entladener Batteriepack des Benutzers in dem k^{ten} Ladeschacht eingelagert wird, nachdem der voll aufgeladene Batteriepack aus dem k^{ten} Ladeschacht ausgelagert worden ist.

6. Batteriewechselstation nach Anspruch 1, wobei die Steuereinheit konfiguriert ist, um die Informationseingabe/-ausgabevorrichtung zu steuern, um ein Nutzungsablehnungssignal für den voll aufgeladenen Batteriepack auszugeben, bevor der voll aufgeladene Batteriepack aus dem k^{ten} Ladeschacht ausgelagert wird.

7. Batteriewechselstation nach Anspruch 1, wobei die Steuereinheit konfiguriert ist, um die Informationseingabe/-ausgabevorrichtung zu steuern, um eine Batterieeinlagerungsanforderungsnachricht als Reaktion darauf auszugeben, dass ein in dem k^{ten} Ladeschacht eingelagerter entladener Batteriepack nicht erkannt wird, bis eine verstrichene Zeit ab einem Auslagerungszeitpunkt des voll aufgeladenen Batteriepacks aus dem k^{ten} Ladeschacht eine Schwellenzeit erreicht.

8. Batteriewechselstation nach Anspruch 7, wobei die Steuereinheit konfiguriert ist, um eine Belohnung oder eine Strafe für den Benutzer basierend auf der verstrichenen Zeit ab dem Auslagerungszeitpunkt des voll aufgeladenen Batteriepacks aus dem k^{ten} Ladeschacht zu bestimmen.

9. Batteriewechselstation nach Anspruch 8, wobei die Belohnung eine Verlängerung der Schwellenzeit beinhaltet, und
wobei die Strafe eine Verkürzung der Schwellenzeit beinhaltet.

10. Batteriewechselsystem, umfassend die Batteriewechselstation nach einem der Ansprüche 1 bis 9.

11. Steuerungsverfahren für eine Batteriewechselstation, die erste bis m^{te} Ladeschächte, die jeweils zum Einlagern und Auslagern eines Batteriepacks in der Lage sind, eine Informationseingabe/-ausgabevorrichtung und eine Steuereinheit beinhaltet, wobei m eine natürliche Zahl von 2 oder mehr ist, wobei das Steuerungsverfahren umfasst:
durch die Steuereinheit, Empfangen (S410) einer Batteriewechselanforderung von einem Benutzer über die Informationseingabe/-ausgabevorrichtung;
durch die Steuerung, Bestimmen, ob eine Batterieauslagerungsbedingung als Reaktion auf die Batteriewechselanforderung erfüllt ist; und
Umschalten (S440) eines k^{ten} Ladeschachts, in dem ein voll aufgeladener Batteriepack eingelagert ist, unter den ersten bis m^{ten} Ladeplätzen von einem gesperrten Modus in einen entsperrten Modus, als Reaktion darauf, dass die Batterieauslagerungsbedingung erfüllt ist, wobei k eine natürliche Zahl kleiner oder gleich m ist;
**dadurch gekennzeichnet, dass** es weiter umfasst: durch die Steuerung, Steuern (S470) der Informationseingabe/-ausgabevorrichtung, um ein Nutzungsgenehmigungssignal für den voll aufgeladenen Batteriepack auszugeben, um den voll aufgeladenen Batteriepack von einem Nutzungsablehnungszustand in einen Nutzungsgenehmigungszustand als Reaktion darauf umzuschalten, dass ein entladener Batteriepack in dem k^{ten} Ladeschacht eingelagert wird, nachdem der voll aufgeladene Batteriepack aus dem k^{ten} Ladeschacht ausgelagert worden ist.

12. Steuerungsverfahren für die Batteriewechselstation nach Anspruch 11, wobei die Batterieauslagerungsbedingung mindestens eine von (i) einer ersten Auslagerungsbedingung, bei der eine Nutzungsberechtigung des Benutzers durch Benutzeridentifikationsinformationen des Benutzers authentifiziert wird, und (ii) einer zweiten Auslagerungsbedingung, bei der sich ein entladener Batteriepack an die Batteriewechselstation angrenzend befindet, beinhaltet.

13. Steuerungsverfahren für die Batteriewechselstation nach Anspruch 11, weiter umfassend: durch die Steuerung, Steuern (S480) der Informationseingabe/- ausgabevorrichtung, um eine Batterieeinlagerungsanforderungsnachricht als Reaktion darauf auszugeben, dass der in dem k^{ten} Ladeschacht eingelagerte ausgelagerte Batteriepack des Benutzers nicht erkannt wird, bis eine verstrichene Zeit ab einem Auslagerungszeitpunkt des voll aufgeladenen Batteriepacks aus dem k^{ten} Ladeschacht eine Schwellenzeit erreicht.

## Revendications

1. Station d'échange de batteries (100), comprenant :
des premier à m^{ième} emplacements de charge (S₁, ..., Sₘ) capables de stocker et de retirer un bloc-batterie, respectivement, où m est un nombre naturel de 2 ou plus ;
un dispositif d'entrée/sortie d'informations (120) configuré pour recevoir une demande de remplacement de batterie d'un utilisateur ; et
un contrôleur (130) configuré pour vérifier les informations de stockage de batterie des premier à m^{ième} emplacements de charge,
dans laquelle le contrôleur est configuré pour :
déterminer, en réponse à la demande de remplacement de batterie, si une condition de retrait de batterie est satisfaite, et
commuter un k^{ième} emplacement de charge dans lequel un bloc-batterie entièrement chargé est stocké parmi les premier à m^{ième} emplacements de charge d'un mode verrouillé à un mode déverrouillé en réponse au fait que la condition de retrait de batterie est satisfaite, où k est un nombre naturel inférieur ou égal à m ;
**caractérisée en ce que** le contrôleur est en outre configuré pour commander le dispositif d'entrée/sortie d'informations pour délivrer un signal d'approbation d'utilisation pour le bloc-batterie entièrement chargé afin de commuter le bloc-batterie entièrement chargé d'un état de désapprobation d'utilisation à un état d'approbation d'utilisation en réponse au stockage d'un bloc-batterie déchargé dans le k^{ième} emplacement de charge, après que le bloc-batterie entièrement chargé a été retiré du k^{ième} emplacement de charge.

2. Station d'échange de batteries selon la revendication 1, dans laquelle la condition de retrait de batterie inclut au moins l'une parmi (i) une première condition de retrait dans laquelle une autorisation d'utilisation de l'utilisateur est authentifiée par des informations d'identification d'utilisateur de l'utilisateur, et (ii) une seconde condition de retrait dans laquelle un bloc-batterie déchargé est situé à proximité de la station d'échange de batteries.

3. Station d'échange de batteries selon la revendication 1, dans laquelle le contrôleur est configuré pour déterminer si la seconde condition de retrait est satisfaite, à condition que la première condition de retrait soit satisfaite.

4. Station d'échange de batteries selon la revendication 2, dans laquelle le contrôleur est configuré pour déterminer que la seconde condition de retrait est satisfaite en réponse à des informations d'identification de bloc du bloc-batterie déchargé étant détectées sans contact par le dispositif d'entrée/sortie d'informations.

5. Station d'échange de batteries selon la revendication 1, dans laquelle le contrôleur est configuré pour commuter le k^{ième} emplacement de charge du mode déverrouillé au mode verrouillé en réponse au stockage d'un bloc-batterie déchargé de l'utilisateur dans le k^{ième} emplacement de charge, après que le bloc-batterie entièrement chargé a été retiré du k^{ième} emplacement de charge.

6. Station d'échange de batteries selon la revendication 1, dans laquelle le contrôleur est configuré pour commander le dispositif d'entrée/sortie d'informations pour délivrer un signal de désapprobation d'utilisation pour le bloc-batterie entièrement chargé, avant que le bloc-batterie entièrement chargé soit retiré du k^{ième} emplacement de charge.

7. Station d'échange de batteries selon la revendication 1, dans laquelle le contrôleur est configuré pour commander le dispositif d'entrée/sortie d'informations pour délivrer un message de demande de stockage de batterie en réponse au fait qu'un bloc-batterie déchargé stocké dans le k^{ième} emplacement de charge n'est pas détecté jusqu'à ce qu'un temps écoulé depuis un moment du retrait du bloc-batterie entièrement chargé du k^{ième} emplacement de charge atteigne un temps seuil.

8. Station d'échange de batteries selon la revendication 7, dans laquelle le contrôleur est configuré pour déterminer une récompense ou une pénalité pour l'utilisateur sur la base du temps écoulé depuis le moment du retrait du bloc-batterie entièrement chargé du k^{ième} emplacement de charge.

9. Station d'échange de batteries selon la revendication 8, dans laquelle la récompense inclut une extension du temps seuil, et dans laquelle la pénalité inclut un raccourcissement du temps seuil.

10. Système d'échange de batteries, comprenant la station d'échange de batteries selon l'une quelconque des revendications 1 à 9.

11. Procédé de commande d'une station d'échange de batteries, qui inclut des premier à m^{ième} emplacements de charge capables de stocker et de retirer un bloc-batterie, respectivement, un dispositif d'entrée/sortie d'informations, et un contrôleur, où m est un nombre naturel de 2 ou plus, le procédé de commande comprenant :
par le contrôleur, la réception (S410) d'une demande de remplacement de batterie d'un utilisateur par l'intermédiaire du dispositif d'entrée/sortie d'informations ;
par le contrôleur, la détermination consistant à déterminer si une condition de retrait de batterie est satisfaite en réponse à la demande de remplacement de batterie ; et
la commutation (S440) d'un k^{ième} emplacement de charge dans lequel un bloc-batterie entièrement chargé est stocké parmi les premier à m^{ième} emplacements de charge d'un mode verrouillé à un mode déverrouillé en réponse au fait que la condition de retrait de batterie est satisfaite, où k est un nombre naturel inférieur ou égal à m ;
**caractérisé en ce qu'**il comprend en outre : par le contrôleur, la commande (S470) du dispositif d'entrée/sortie d'informations pour délivrer un signal d'approbation d'utilisation pour le bloc-batterie entièrement chargé afin de commuter le bloc-batterie entièrement chargé d'un état de désapprobation d'utilisation à un état d'approbation d'utilisation en réponse au stockage d'un bloc-batterie déchargé dans le k^{ième} emplacement de charge, après que le bloc-batterie entièrement chargé a été retiré du k^{ième} emplacement de charge.

12. Procédé de commande de la station d'échange de batteries selon la revendication 11, dans lequel la condition de retrait de batterie inclut au moins l'une parmi (i) une première condition de retrait dans laquelle une autorisation d'utilisation de l'utilisateur est authentifiée par des informations d'identification d'utilisateur de l'utilisateur, et (ii) une seconde condition de retrait dans laquelle un bloc-batterie déchargé est situé à proximité de la station d'échange de batteries.

13. Procédé de commande de la station d'échange de batteries selon la revendication 11, comprenant en outre : par le contrôleur, la commande (S480) du dispositif d'entrée/sortie d'informations pour délivrer un message de demande de stockage de batterie en réponse au fait que le bloc-batterie déchargé de l'utilisateur stocké dans le k^{ième} emplacement de charge n'est pas détecté jusqu'à ce qu'un temps écoulé depuis un moment du retrait du bloc-batterie entièrement chargé du k^{ième} emplacement de charge atteigne un temps seuil.
